Europäisches Patentamt

European Patent Office

Office européen des brevets

(11) Publication number: **0 590 287 A1**

## EUROPEAN PATENT APPLICATION

(21) Application number: **93113082.7**

(22) Date of filing: **16.08.93**

(51) Int. Cl.5: **C08K 5/11, C08J 9/00**

(30) Priority: **30.09.92 US 954216**

(43) Date of publication of application:
**06.04.94 Bulletin 94/14**

(84) Designated Contracting States:
**BE DE ES FR GB IT SE**

(71) Applicant: **BASF CORPORATION
8 Campus Drive
Parsippany, New Jersey 07054(US)**

(72) Inventor: **Patterson, Jimmy L.
2845 Birchwood
Trenton, Michigan 48183(US)**
Inventor: **Tucker, John R.
354 Emmons Boulevard
Wyandotte, Michigan 48192(US)**

(74) Representative: **Mutzbauer, Helmut, Dr. et al
BASF Aktiengesellschaft,
Patentabteilung ZDX - C 6
D-67056 Ludwigshafen (DE)**

(54) **Urethane foam additive.**

(57) Molded, composite articles can be prepared from a rigid surface piece and a polyurethane foam forming composition containing the dimethyl esters of adipic, glutaric, and succinic acids, and mixtures thereof. The foams containing these dimethyl esters are generally open celled, have good adhesion between the foam surface piece interface, and exhibit reduced friability even at lower molding temperatures.

EP 0 590 287 A1

The invention relates to processes for the preparation of molded articles using polyurethane foams containing dibasic esters as additives. These foams are characterized by reduced friability at lower mold temperatures, an open-celled structure, and enhanced adhesion at the foam-facing material interface.

Dibasic esters of adipic, glutaric, and succinic acid have been used in the preparation of polyester polyols by reacting the dibasic ester with a hydroxyl-containing compound, preferably a polyoxyalkylene glycol. These subsequently formed polyester polyols have been used to prepare polyurethane foams and elastomers. Such polyols are described in U.S. Patents 4,525,574 and 4,716,213.

U.S. Patent 4,481,307 describes polyester polyols prepared for use in polyurethane foams as surfactants. Typically, the foams of this invention exhibit a high closed-cell content. U.S. Patent 4,490,517 describes the use of dibasic esters as mold release agents in solid TDI residue binder compositions for lignocellulosic composite materials prepared therefrom.

U.S. Patent 5,102,919 describes polyurethane/polyisocyanurate foams containing mixtures of dibasic esters of adipic, glutaric, and succinic acids. Such foams exhibit reduced smoke generating characteristics when compared with the same foams without the dibasic ester additive.

U.S. Patent 5,114,985 describes low density cellular, rigid polyurethanes which contain the dibasic esters of adipic, glutaric, and succinic acids as cell-opening agents. The use of the dibasic esters obviates the need for other surfactants which reduce adhesion of the polyurethanes to fabrics in pour-behind-fabric applications.

According to the present invention, it has been found that the addition of dibasic acid esters (DBE) selected from the group comprising dimethyl esters of adipic, glutaric, succinic acids, and mixtures thereof, to a water-blown polyurethane foam formulation, functions effectively as a cell-opening agent, viscosity reducer, and adhesion enhancer between the foam and a surfacing material. The foams of the present invention also exhibit reduced friability even when processed at mold temperatures of 100°F or less. This is significant in that water-blown foams generally require higher molding temperatures. These foams are useful in molded applications such as an insulator foam in coolers and in laminated board production. Furthermore, these foams may be prepared without the use of halogenated fluorocarbons or other environmentally undesirable volatile hydrocarbons.

Dibasic acid esters (DBE) having the formula:

$$CH_3OOC(CH_2)_nCOOCH_3$$

where n = 2, 3, or 4 may be added to rigid polyurethane foam formulations. This type of formulation is useful in rigid molded applications such as coolers and laminate board. The open-celled foams of the present invention exhibit good adhesion, reduced resin viscosity, and reduced friability. bisphenols, and hydroxyl-terminated polyethers, polyesters, and polyacetals, among others. Extensive lists of suitable polyols may be found in the above references and in many patents, for example, in columns 2 and 3 of U.S. Patent No. 3,652,639; columns 2-6 of U.S. Patent No. 4,421,872; and columns 4-6 of U.S. Patent No. 4,310,632; these three patents being hereby incorporated by reference.

Preferably used are hydroxyl-terminated polyoxyalkylene polyols. They are generally prepared by well-known methods, for example, by the base catalyst addition of an alkylene oxide, preferably ethylene oxide (oxirane), propylene oxide (methyloxirane), or butylene oxide (ethyloxirane) to an initiator molecule containing on the average two or more active hydrogens. Examples of preferred initiator molecules are dihydric initiators such as ethylene glycol, propylene glycol, butylene glycol, neopentyl glycol, 1,6-hexanediol, hydroquinone, resorcinol, the bisphenols, aniline and other aromatic monoamines, aliphatic monoamines, and monoesters of glycerine; trihydric initiators such as glycerine, trimethylolpropane, trimethylolethane, N-alkylphenylenediamines, mono-, di-, and trialkanolamines; tetrahydric initiators such as ethylene diamine, propylenediamine, 2,4'-, 2,2'-, and 4,4'-methylenedianiline, toluenediamine, and pentaerythritol; pentahydric initiators such as diethylenetriamine; and hexahydric and octahydric initiators such as sorbitol and sucrose.

Addition of alkylene oxide to the initiator molecules may take place simultaneously or sequentially when more than one alkylene oxide is used, resulting in block, heteric, and block-heteric polyoxyalkylene polyethers. The number of hydroxyl groups will generally equal the number of active hydrogens in the initiator molecule. Processes for preparing such polyethers are described both in the Polyurethane Handbook and Polyurethanes: Chemistry and Technology as well as in many patents, for example, U.S. Patents 1,922,451; 2,674,619; 1,922,459; 3,190,927; and 3,346,557.

Polyester polyols also represent suitable reactants in the urethane reaction. Such polyesters are well known in the art and are prepared simply by polymerizing polycarboxylic acids or their derivatives, for example, their acid chlorides or anhydrides, with a polyol. Numerous polycarboxylic acids are suitable, for example, malonic acid, citric acid, succinic acid, glutaric acid, adipic acid, pimelic acid, azelaic acid, sebacic acid, maleic acid, fumaric acid, terephthalic acid, and phthalic acid. Numerous polyols are suitable, for example, the various aliphatic glycols, trimethylolpropane and trimethylolethane, a-methylglucoside, and sorbitol. Also suitable are low molecular weight polyoxyalkylene glycols such as polyoxyethylene glycol, polyoxypropylene glycol, and block and heteric polyoxyethylenepolyoxypropylene glycols. These lists of dicarboxylic acids and polyols are illustrative only and not limiting. An excess of polyol should be used to ensure hydroxyl termination although carboxyl groups are also reactive with isocyanates. Methods of preparation of such polyester polyols are given in the Polyurethane Handbook and Polyurethanes: Chemistry and Technology.

Water is the preferred blowing agent and may be used in amounts of up to about 4 weight percent of the polyol (B-side) component. The density of the foam decreases with increasing water content. When water is used as the blowing agent, the polyisocyanate component is increased proportionately. Calculating the amount of water required and isocyanate required are routinely performed by those skilled in the arts of polyurethane and polyisocyanurate foams.

Chlorofluorocarbons (CFCs) and other volatile organic compounds may also be used as blowing agents, either alone or in conjunction with water. The use of CFCs, however, is not desirable from an environmental standpoint. When used alone CFC blowing agents and other halogenated organics such as methylene chloride are generally used in amount up to about 30 weight percent of the polyol component, preferably from 15 to about 25 weight percent. Other volatile organic compounds such as pentane, isopentane, acetone, and other like are used in correspondingly lesser amounts due to their lower molecular weights. When co-blown, the CFC-type blowing agents are utilized in lesser amounts, for example, up to about 20 weight percent of the polyol component.

Flame retardants may also be used when required by the formulation. Suitable flame retardants are well known to those skill in the art; but the low molecular weight halogenated phosphate esters, polyhalogenated biphenyls, and biphenyloxides and the like may be used when flame retardants are necessary.

Suitable catalysts include both urethane and isocyanurate reaction-promoting catalysts and are well known to those skilled in the art of polyurethanes. In general, the presence of at least an effective amount of isocyanurate-promoting catalyst is necessary. This catalyst may be purposefully added or may be present in the polyol by neutralization of the alkali metal polyoxyalkylation catalyst with a carboxylic acid. Preferred catalysts are tertiary amines advantageously utilized in a glycol solution, an example of which would be DABCO TMR-3, a proprietary blend of a tertiary amine and glycol available from Air Products Chemical Company.

Further materials which may be present in the polyurethane foam-forming composition include fillers, pigments, such as carbon black, bacteriostats, crosslinkers, chain extenders, antioxidants, and the like. Many such additives and auxiliary materials are discussed in the Polyurethane Handbook, Chapter 3, §3.4, page 90-109; and in Polyurethanes: Chemistry and Technology, Part II, Technology.

The dibasic esters of the present invention are aliphatic dibasic acid esters. Specifically, they are the refined dimethyl esters of adipic, glutaric, and succinic acids. The dibasic acid esters used in the present invention are available commercially from DuPont. These dibasic acid esters are manufactured from a mixed acid stream obtained from DuPont's adipic acid plants. The primary refined ester product is designated DBE and has a typical ester content of about 17 percent dimethyl adipate, 66 percent dimethylglutarate, and 16.5 percent dimethyl succinate. DuPont fractionates DBE into other mixtures and pure components. In addition to DBE, there are five (5) fractions commercially available: DBE-2, DBE-3, DBE-4, DBE-5, and DBE-9. The amount of DBE used is limited for the most part by practical considerations, which include its effect on the physical attributes of the resin component itself and the effect on the foam characteristics, such as stability and economic considerations. DBE may be used in amounts up to about 30 weight percent of the resin. However, a preferred range is from about 5 weight percent to about 15 weight percent based on the weight of the resin component.

The DBE polyurethane foam-forming compositions are useful in preparing molded articles such as coolers, laminate board and the like. Because the nature of the B-side is not critical as long as it is capable of forming upon reaction with a given isocyanate a rigid foam, the DBE-containing formulations are adaptable to a variety of foaming techniques, such as an open pour method, RIM, etc. It is particularly useful in limited viscosity systems, such as the autofroth system, which has a processing limit of about 800 cps at 75°F.

An example of a method of preparing a molded article is illustrated by the following:

A preformed, rigid, molded surface piece is placed in a preheated prepared mold having internal contours approximating the shape of the preformed molded piece. The mold may be shot with the intimately mixed A and B sides while open and then closed, or may be closed and shot. The heat of reaction causes volatile blowing agents to vaporize, while water-blown foams result from the reaction of water with the isocyanate. Following a reaction time of from several seconds to several minutes, the part is demolded. Generally, a mold release coating is necessary. External mold releases are well known to those skilled in the art. The preformed molded piece used in the molding process may include, but is not limited to, polyethylene, polypropylene, polystyrene, or ABS resin. Examples of some molded articles produced using the polyurethane of present invention include picnic coolers, laminate board, and replacements for supports or footings in relatively light duty areas, e.g., support bases or pads for free standing residential air conditioning units.

Having thus described the invention, the following examples are meant as illustrations and should not be construed as limiting in nature.

| | |
|---|---|
| Polyol A | is a toluenediamine initiated polyoxyethylene-polyoxypropylene block copolymer having a nominal molecular weight of 570. |
| Polyol B | is a glycerine initiated polyoxypropylene polyol having a nominal molecular weight of 420. |
| Polyol C | is a sucrose/propylene glycol mixed initiator polyoxypropylene polyol having an average functionality of 6.5 and a nominal molecular weight of 640. |
| Polyol D | is a pentaerythritol/propylene glycol mixed initiator polyoxypropylene polyol having an average functionality of 3.5 and a nominal molecular weight of 440. |
| Polyol E | is a toluenediamine/dipropylene mixed initiator polyoxyethylene polyol with a polyoxypropylene cap having an average functionality of about 3.8 and a nominal molecular weight of 471. |
| Polyol F | is a dipropylene glycol initiated polyoxypropylene-polyoxyethylene block copolymer having a nominal molecular weight of 3,473. |
| DC 193 | is a silicone surfactant commercially available from Air Products. |
| DMCHA | is N,N-dimethylcyclohexylamine. |
| DABCO 33LV® | is 33 percent triethylenediamine in 67 percent dipropylene glycol. |
| DABCO T-12 | is the designation for dibutyltin dilaurate. |
| DABCO T-45 | is the designation for potassium octoate. |
| DBE | is a mixture of esters having typical ester content of about 17 percent dimethyladipate, 66 percent dimethylglutarate, and 16.5 percent dimethylsuccinate. |
| DBE-3 | is 89 percent dimethyladipate, 10 percent dimethylglutarate, and 0.5 percent dimethylsuccinate. |
| DBE-4 | is 99.5 percent dimethylsuccinate. |
| DBE-5 | is 0.1 percent dimethyladipate, 99 percent dimethylglutarate, and 0.8 percent dimethylsuccinate. |
| ISO 1 | is a solvent-free polymethylene-polyphenylisocyanate with a functionality of about 2.7 and viscosity at 25°C of 200 cps. |
| ISO 2 | is a solvent-free polymethylene-polyphenylisocyanate with a functionality of about 2.7 and viscosity at 25°C of 700 cps. |

TABLE 1

| RESIN/EXAMPLE | 1 | 2 | 3 | 4 | 5 | 6 | 7 | 8 | 9 |
|---|---|---|---|---|---|---|---|---|---|
| POLYOL A | 60 | 60 | 60 | --- | --- | 55 | --- | 55 | --- |
| POLYOL B | 30 | 30 | 30 | 35 | 35 | 35 | 35 | 30 | --- |
| POLYOL C | 10 | 10 | 10 | 55 | --- | --- | --- | 5.0 | 10 |
| POLYOL D | --- | --- | --- | 10 | 10 | 10 | 10 | 10 | 25 |
| POLYOL E | --- | --- | --- | 55 | 55 | --- | 55 | --- | --- |
| POLYOL F | --- | --- | --- | --- | --- | --- | --- | --- | 65 |
| DC 193 | 1.5 | 1.5 | 1.5 | 1.5 | 1.5 | 1.5 | 1.5 | 1.5 | 1.5 |
| DMCHA | 1.0 | 1.0 | 1.0 | 1.0 | 1.0 | 1.0 | 1.0 | 1.0 | --- |
| DABCO 33LV | --- | --- | --- | --- | --- | --- | --- | --- | 0.05 |
| DABCO T-12 | 0.05 | 0.05 | 0.05 | 0.05 | 0.05 | 0.05 | 0.05 | 0.05 | --- |
| DABCO T-45 | 0.75 | 0.75 | 0.75 | 0.75 | 0.75 | 0.75 | 0.75 | 0.75 | --- |
| DBE | --- | --- | --- | 20 | 40 | 10 | 20 | 10 | 10 |
| DBE-3 | 10 | --- | --- | --- | --- | --- | --- | --- | --- |
| DBE-4 | --- | --- | 10 | --- | --- | --- | --- | --- | --- |
| DBE-5 | --- | 10 | --- | --- | --- | --- | --- | --- | --- |
| WATER | 7.5 | 7.5 | 7.5 | 7.5 | 7.5 | 7.5 | 7.5 | 7.5 | 7.5 |
| ISOCYANATE | | | | | | | | | |
| ISO 1 | 226.9 | 226.9 | 226.9 | --- | --- | --- | --- | --- | --- |
| ISO 2 | --- | --- | --- | 234.5 | 234.5 | 226 | 277.2 | 233.3 | 184.5 |
| CREAM (SEC) | 18 | 20 | 21 | 10 | 11 | 14 | 14 | 12 | 30 |
| GEL (SEC) | 53 | 54 | 53 | 39 | 45 | 49 | 45 | 51 | 132 |
| *T/F (SEC) | 73 | 89 | 85 | 60 | 60 | 113 | 73 | 75 | 540 |
| RESIN TEMP °F | 73 | 73 | 73 | 73 | 73 | 73 | 73 | 73 | --- |
| ISO TEMP °F | 73 | 73 | 73 | 73 | 73 | 73 | 73 | 73 | --- |
| CUP DENSITY | 1.37 | 1.39 | 1.39 | 1.48 | 1.51 | 1.41 | 1.60 | 1.52 | 1.85 |
| SHRINKAGE | SLIGHT | SLIGHT | SLIGHT | SLIGHT | SLIGHT | SLIGHT | SLIGHT | SLIGHT | --- |
| FRIABILITY | NO | NO | NO | NO | NO | SLIGHT | SLIGHT | SLIGHT | --- |

*TO FILL, I.E., WHEN FOAM REACHES TOP OF CUP.

PROCEDURE FOR EXAMPLES 1-8

Weighed amounts of the resin and isocyanate were added to #10-sized ponderosa cups. The ingredients were mixed using a high speed stirrer for about ten (10) seconds. The reactivity characteristics were measured and a full-cup density determination made. Friability and shrinkage were determined after allowing the foam to cure. Friability was determined by observing how easily the foam surface powdered when rubbed or abraded.

PROCEDURE FOR EXAMPLE 9

A procedure identical to Examples 1-8 was run to determine reactivity characteristics. In addition, molded parts comprising a rigid polypropylene sheet cut to fit a 2' X 2' X 2" mold and the foam formulation from Example 9 were made. Sixteen (16) composite parts were made at varying temperatures and friability determined. The procedure for mixing the component was the same as that used in Examples 1-8. An open-pour technique was used to add the foaming mixture to the prepared mold containing the rigid polypropylene. The mold was clamped shut and the piece allowed to cure. Friability was observed on the cured rigid composite molded article and the results shown in Table 2.

5

**TABLE 2**

| PART NO. | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| MOLD TEMP °F | 130 | 130 | 120 | 120 | 110 | 110 | 100 | 100 | 90 | 90 | 80 | 80 | 73 | 73 | 90 | 90 |
| PART TEMP °F | 130 | 130 | 120 | 120 | 110 | 110 | 100 | 100 | 90 | 90 | 80 | 80 | 73 | 73 | 90 | 90 |
| DENSITY PCF | 1.85 | 1.85 | 1.90 | 1.90 | 2.10 | 2.10 | 2.10 | 2.10 | 2.20 | 2.20 | 2.20 | 2.20 | 2.30 | 2.30 | 2.30 | 2.30 |
| FRIABILITY | NO | NO | NO | NO | NO | NO | NO | NO | VERY SLIGHT | VERY SLIGHT | SLIGHT | SLIGHT | YES | YES | VERY SLIGHT | VERY SLIGHT |

## Claims

1. A process for preparing a rigid composite molded article comprising:
   a) placing a rigid surface piece in a preheated prepared mold;

b) adding a polyurethane foam composition consisting essentially of

(1) an organic isocyanate,

(2) an isocyanate reactive polyol,

(3) a blowing agent,

(4) a catalyst capable of producing urethane and/or isocyanurate formation,

(5) optionally, surfactants, crosslinkers, chain extenders, flame retardants, and,

(6) a dibasic ester selected from the group consisting of dimethyl esters of adipic, glutaric, and succinic acids, and the mixtures thereof;

c) allowing said composite molded article to cure; and,

d) removing said article from said mold.

2. A method as claimed in claim 1, wherein the rigid surface piece material is selected from the group consisting of polyethylene, polypropylene, polystyrene, and acrylonitrile-butadiene-styrene (ABS) resin.

3. A method as claimed in claim 1, wherein the rigid surface piece is preformed.

4. A method as claimed in claim 1, wherein the mold temperature is from 70°F to about 130°F.

5. A method as claimed in claim 1, wherein the mold temperature is from 80°F to 100°F.

6. A method as claimed in claim 1, wherein the dibasic ester is a mixture of about 17 percent dimethyladipate, 66 percent dimethylglutarate, and 16.5 percent dimethylsuccinate.

7. A method as claimed in claim 1, wherein the dibasic esters is present in amounts of from about 5 weight percent to about 15 weight percent based on the total weight of the resin component.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X | US-A-5 114 985 (KUYZIN ET AL) <br> * column 1, line 59 - column 5, line 45; claims 1-7 * | 1,6,7 | C08K5/11 <br> C08J9/00 |
| D,X | US-A-5 102 919 (SWAB) <br> * column 2, line 26 - column 5, line 22; claims 1-6 * | 1,6,7 | |
| A | GB-A-1 043 570 (CONTINENTAL GUMMI) <br> * page 1, line 11 - page 2, line 99; claims 1-9 * | 1 | |
| A | EP-A-0 128 060 (CENTRE DE RECHERCHE INDUSTRIELLE DU QUEBEC) <br> * page 5, line 1 - page 8, line 33; claims 1,2 * | 1 | |
| D | & US-A-4 525 574 | | |

TECHNICAL FIELDS SEARCHED (Int. Cl.5)

C08K
C08J
C08G

The present search report has been drawn up for all claims

| Place of search | Date of completion of the search | Examiner |
|---|---|---|
| THE HAGUE | 19 OCTOBER 1993 | BOURGONJE A.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document